# EUROPEAN PATENT SPECIFICATION

(11) **EP 2 137 395 B1**
(45) Date of publication and mention of the grant of the patent: **22.09.2010**
(21) Application number: 08719289.4
(22) Date of filing: 13.03.2008
(51) Int. Cl.: F02K 9/82, F02K 9/97

(54) **ROCKET ENGINE LAVAL NOZZLE**
LAVALDÜSE EINES RAKETENANTRIEBS
TUYÈRE DE LAVAL DE MOTEUR DE FUSÉE

(30) Priority: 24.04.2007 RU 2007115187
(43) Date of publication of application: 30.12.2009
(73) Proprietor: Moscow Aviation Institute, Moscow 125993 (RU)
(72) Inventor: SEMENOV, Vasily, V., Moscow, 115 477 (RU); SERGIENKO, Alexander, A., Moscow, 125 581 (RU)
(74) Representative: Office Freylinger
(86) International application number: PCT/IB2008/000581
(87) International publication number: WO 2008/129372

(56) References cited:
- DE-A1- 10 141 108
- US-A- 2 799 990
- US-A- 3 095 694
- US-A- 3 563 467
- US-A- 4 947 644
- US-A- 5 619 851

## Description

### Technical field

The present invention relates to the field of rocket engineering and can be applied, in particular, to one-chamber and multi-chamber first and second stage liquid propellant rocket engines.

### Background Art

Document US 4,947,644 discloses a rocket engine expansion Laval nozzle with a curvature discontinuity. (Such are sometimes also said to have a "contour break" or be of the double or multiple bell type.) The nozzle of the mentioned document comprises a first expansion section (hereinafter also referred to as low-altitude expansion section), adjacent the nozzle throat, for low-altitude operation and a second expansion section (hereinafter also referred to as high-altitude expansion section) for high-altitude operation arranged downstream of the first expansion section with respect to the flow of the exhaust gases. At the juncture of the first and second expansion sections, there is a ring slot, closed to the outside of the nozzle, to which gas injectors are connected. These gas injectors serve to inject an additional jet of gas into the diverging portion of the nozzle, in the same direction as the main flow of gas. The document gives a good explanation for the utility of such additional gas injection.

However, the nozzle disclosed in the above document suffers from the drawback that during the ascent of the rocket, the ambient pressure drops, and, in order to hold shock waves at the edge of the low-altitude expansion section, more injected gas is required. Failure to inject additional gas at a sufficient rate causes shock waves to leave the low-altitude nozzle edge earlier than gas pressure at the edge becomes equal to ambient pressure. As a result, gas overexpansion takes then place in the high-altitude expansion section, which results in less than optimal thrust.

### Technical problem

It is an object of the present invention to increase the trajectory-average specific linear momentum of a space vehicle. This object is achieved by a Laval nozzle for a rocket engine as claimed in claim 1.

### General Description of the Invention

To solve the above-mentioned problem, the present invention proposes a rocket engine Laval nozzle with a nozzle throat, a first expansion section, connected to the throat, and a second expansion section joined to the first expansion section. Together, the expansion sections define an inner nozzle surface that delimits an expansion zone for producing thrust in direction of the nozzle axis by expansion of an exhaust gas flow discharged through the throat. A ring slot, formed at the junction of the first and second expansion sections, extends circumferentially around the nozzle axis. Gas discharge ducts of a gas injection device are connected to the ring slot for injection of additional gas into the expansion zone. According to the invention, a wall extends in the ring slot between the first and second expansion sections. The wall comprises through holes disposed about the nozzle axis. These through holes allow fluid communication between the expansion zone and the outer atmosphere outside of the nozzle.
The radial width of the ring slot amounts to at most 40 % of the radius of the throat and the gas discharge ducts have orifices calibrated such that a flow rate of additional gas injected there through into the expansion zone does not exceed 5 % of the flow rate of the main exhaust gas flow. The inner nozzle surface preferably has a curvature discontinuity at the junction of the first expansion section and the second expansion section. In contrast to the nozzle known from US 4,947,644, which has a closed ring slot, preventing the transfer of ambient pressure through the slot into the expansion zone of the nozzle, the nozzle according to the invention allows pressure transfer via the through holes. Along with additional gas being injected by the gas injection device, atmospheric air is drawn into the gas expansion zone, which improves separation of gas flow from the inner surface of the nozzle (causing the shock wave to remain on the low-altitude section). As altitude increases, the flow of additional gas and atmospheric air gradually turns and adheres to the inner wall of the high-altitude section; the shock wave eventually "jumps" to the high-altitude section.

Preferably, the maximum radius of the first expansion section (i.e. the radius at the tailing portion of the first expansion section) amounts to between 3 and 7 times the radius of the throat and the maximum radius of the second expansion section (i.e. the radius at the tailing portion of the second expansion section) amounts to between 6 and 15 times the radius of the throat.

Advantageously, the radial width of the ring slot amounts to between 20 and 40 % of the radius of the throat. When a range is indicated herein, the boundary values of the range are deemed included in the range.

The gas injection device preferably comprises a manifold connected to the gas discharge ducts, which manifold is advantageously disposed inside the ring slot. Alternatively, it may also be disposed in front of the ring slot, i.e. on the outside of the first expansion section at an axial position that is close to the axial position of the nozzle throat than the ring slot.

According to a preferred embodiment of the invention, the nozzle comprises a further ring slot, the radial widths of the ring slot and the further ring slot amounting together to between 20 and 40 % of the radius of the throat. Such further ring slot is preferably formed at the junction of a third expansion section and the second expansion section. Optionally a curvature discontinuity of the inner nozzle surface may also be present at the further ring slot, i.e. at the junction of the second expansion section and the third expansion section.

Irrespective of whether a third expansion section is present, the second expansion section preferably comprises a cylindrical part surrounding the an axial portion of the first expansion section (i.e. a tailing portion of the first expansion section), such that the ring slot at the junction of the first and second expansion sections is delimited, radially in width, by the cylindrical part of the second expansion section and the axial portion of the first expansion section.

If the nozzle comprises a third expansion section, a cylindrical part is preferably also provided thereon. That cylindrical part then surrounds an axial portion of the second expansion section, so that the further ring slot at the junction of the second and third expansion sections is delimited, radially in width, by the cylindrical part of the third expansion section and the axial portion of the second expansion section.

### Brief Description of the Drawings

Further details and advantages of the present invention will be apparent from the following detailed description of several not limiting embodiments with reference to the attached drawings, wherein:
Fig. 1 is a longitudinal cross-sectional view of a rocket engine Laval nozzle;
Fig. 2 is a detailed view of an additional gas injection device;
Fig 3 is a longitudinal cross-sectional view of a Laval nozzle with two ring slots located coaxially;
Fig. 4 is a longitudinal cross-sectional view of a Laval nozzle with a smooth inner contour (i.e. without a curvature discontinuity);
Fig. 5 is a longitudinal cross-sectional view of a Laval nozzle a double curvature discontinuity (i.e. with three expansion sections);
Fig. 6 is a longitudinal cross-sectional view of a Laval nozzle with a shifted contour;
Fig. 7 shows the altitude characteristic of a Laval altitude nozzle;
Fig. 8 shows a diagram of the dependency of thrust increment of a Laval nozzle on its mode of operation.

### Description of Preferred Embodiments

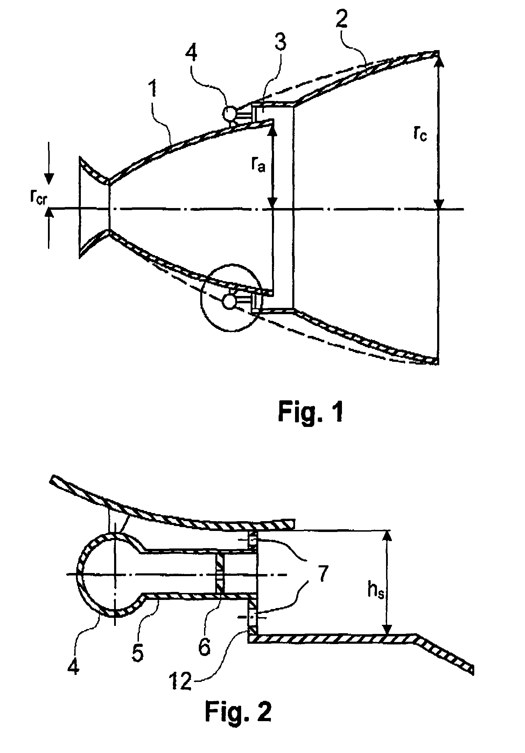

As shown in Figs. 1 and 2, a rocket engine Laval nozzle comprehends the low-altitude expansion section 1, and, located coaxially to it, the high-altitude expansion section 2. Expansion sections 1 and 2 are connected with one another so as to form a ring slot 3. Collector 4 (manifold) for additional gas injection is located in front of or inside ring slot 3 and has outlet ducts or pipes 5 with calibrated orifices 6. The collector 4 for additional gas injection has the form of a tore. Each outlet pipe 5 is located parallel to the axis of the Laval nozzle.

A wall 12 is provided in ring slot 3. Channel-shaped through holes 7 are disposed along the perimeter of the wall 12. The radial width hₛ of ring slot 3 is between 0.2 and 0.4 times the radius r_{cr} of the throat of the Laval nozzle (in short: hₛ=(0.2-0,4)r_{cr}). The radius rₐ of the first expansion section 1 section is rₐ = (3-7)r_{cr}, the radius r_{c} of the second expansion section is r_{c} = (6-15)r_{cr}. The orifices of the outlet pipes 5 are calibrated in such a way that the flow rate of injected additional gas does not exceed 5% of the main gas flow rate discharged through the first expansion section 1.

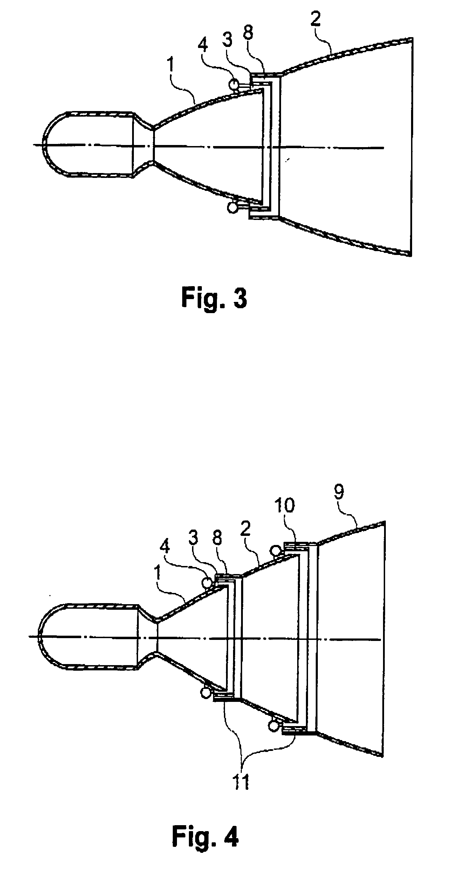

As shown in Fig. 3, the Laval altitude nozzle can be made with an additional second ring slot 8 located coaxially to the first one. The radial width of ring slots 3 and 8 taken together is here h_{tot,s} = (0,2-0,4)r_{cr}.

As illustrated in Figs. 4 to 6, the Laval nozzle can be equipped with at least one additional expansion section 9 located coaxially to the first and second expansion sections 1 and 2. The third expansion section is connected with the second expansion section and forms with it the ring slot 10.

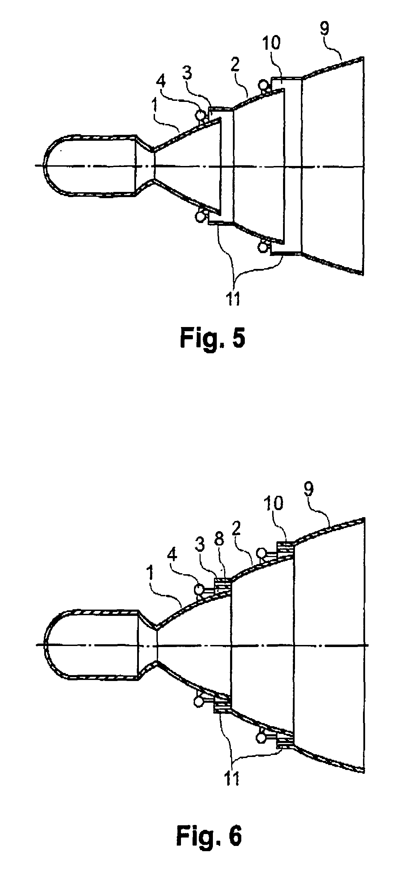

As shown in Fig. 6, each of the high-altitude expansion sections 2 and 9 can comprise a cylindrical part 11 shifted towards the previous expansion section and covering part of its outer surface. The cylindrical part of section 2 thus surrounds a portion of section 1, while the cylindrical part of section 9 surrounds a portion of section 2. Ring slots 3 and 10 are located between the inner surface of the cylindrical parts 11 and the external surface of the first expansion section 1 or the second expansion section 2.

The Laval nozzle can be made so that the curvature along the nozzle axis of each expansion section 2 or 9 is in smooth continuation of the curvature of the first expansion section 1 (see Fig. 4). Alternatively, there can be curvature discontinuities at each junction of the expansion sections.

The radius rₐ of the first expansion section 1 is chosen such that the ratio rₐ/r_{cr} lies between 3 and 7, while the radius of the second expansion section 2 is such that the ratio r_{c}/r_{cr} lies between 6 and 15, where each of rₐ and r_{c} denotes the maximum radius of the respective section.

If the radius of the first expansion section 1 were such that rₐ/r_{cr} < 3 and the radius of the second expansion section 2 such that r_{c}/r_{cr} < 6, the thrust advantage along the flight trajectory of a Laval nozzle would be small, since, on account of reduced expansion ratio of the nozzle, the range of ambient pressure in which altitude compensation occurs would be narrowed.

If the radius of the first expansion section 1 were such that rₐ/r_{cr} > 7 the radius of the second expansion section 2 such that r_{c}/r_{cr} > 1.5 the rocket nozzle would be too heavy because of its size.

If the width of the ring slot 3 were such that hₛ< 0.2 r_{cr} supply of atmospheric air into the nozzle would be insufficient. As a result, the shock wave would leave the edge of the first expansion section quickly and gas overexpansion in Laval nozzle would occur again.

If the width of the ring slot 3 were such that hₛ > 0.4 r_{cr} thrust losses at high altitudes would become too important because of gas leakage from the expansion zone into the surroundings of the nozzle, through the holes provided in the ring slot 3.

If the injection rate of additional gas amounted to more than 5 % of the main gas flow rate, gas-dynamic losses would occur inside the nozzle because of the mixing of two big gas flows.

Operation of the rocket engine Laval nozzle will be described in the following.

During the start of the carrier rocket from earth level and its flight in dense atmosphere, external pressure is higher than internal pressure in the expansion zone of the nozzle. It follows that ambient pressure is transferred into the nozzle through the through holes of ring slot 3. In this case, due to the transfer of ambient pressure and additional injection of gas, a forced gas flow separation occurs at the first expansion section 1. Due to this flow separation, gas overexpansion in Laval altitude nozzle is reduced. In dense atmosphere, the second expansion section 2 behind ring slot 3 is "switched off" (it does not produce thrust and does not cause losses); as a result, the Laval nozzle operates close to the design mode.

Moreover, during the start phase and the flight at lower altitudes, gas injection into the open end of ring slot 3 facilitates the attraction of more air due to its ejection.

During the flight in the upper atmosphere where ambient pressure is considerably reduced, a shock wave leaves the edge of the first expansion section 1 and touches the inner wall of the second expansion section 2. In this phase of the flight, the second expansion section 2 contributes to producing thrust: the Laval nozzle is in full operation.

When the nozzle operates at big altitudes, the injection of additional gas injection into ring slot 3 increases boat tail pressure at the curvature discontinuity of the inner nozzle surface; this results in reduced thrust losses and nozzle operation closer to the design mode.

Since the different expansion sections enter into operation consecutively, the altitude characteristic of the Laval nozzle is close to the characteristic of the ideal nozzle with continuous altitude compensation.

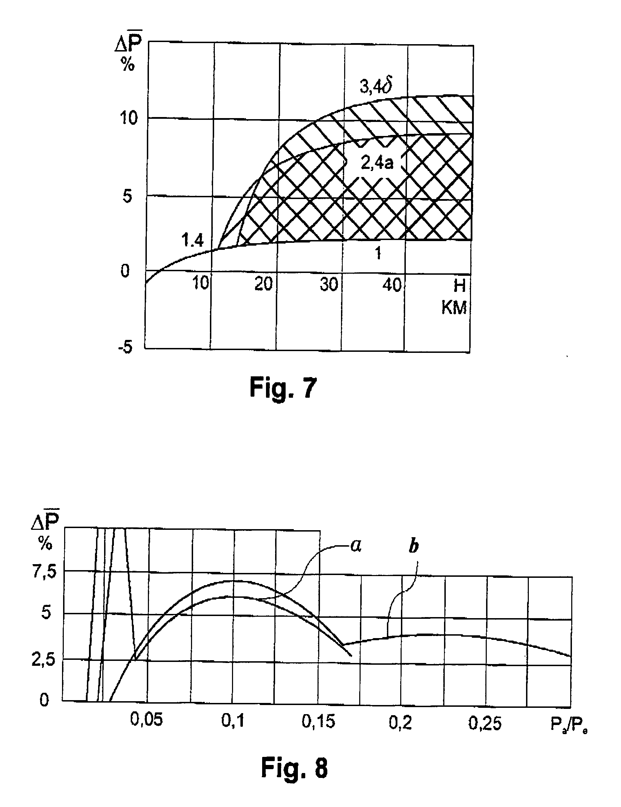

Fig. 7 shows the dependency of the altitude characteristic of a Laval nozzle with curvature discontinuity on its mode of operation. Thrust increment of the nozzle with respect to the thrust of a smooth nozzle is indicated on the vertical of the graph. The rocket's flight altitude is marked on the horizontal axis. The graph shows that with the proposed Laval altitude nozzle thrust increment in a wide range of flight altitudes of a space vehicle is achieved.

Computations show that in a Laval nozzle with curvature discontinuity, in comparison with a smooth nozzle, operating at an ambient pressure of pₐ = 0.06 MPa, the thrust advantage can be as high as 7-9 % due to increased geometric expansion ratio. At low altitudes, a nozzle with a curvature discontinuity has no advantage with respect to a nozzle with continuous curvature, because the low-altitude sections have the same curvature and the high-altitude section of the nozzles are still ineffective (see Fig. 7).

Fig. 8 shows diagrams of Laval nozzle thrust dependency on the mode of operation, where the curve labelled "a" is for a nozzle with one slot and curve labelled "b" is for a nozzle with two slots. Thrust increment of these nozzles with respect to thrust of an ideally adjustable nozzle is indicated on the on the vertical axis. The ratio of ambient pressure to exhaust gas flow pressure relationship is indicated on the horizontal axis. The diagram shows that with the proposed nozzle thrust increment in a wide range of flight altitudes of a space vehicle is achieved.

The principle of operation of a slot-hole nozzle with a smooth contour (Fig. 4) is analogous to that of a nozzle with a curvature discontinuity (e.g. Fig. 1).

When operated in dense atmosphere a nozzle having the expansion sections 2, 9 shifted along the nozzle axis towards the first expansion section 1 (as shown in Fig. 6), a shock wave at the edge of the first expansion section 1 will stay there until gas pressure at that edge is equal to ambient pressure. In this case, gas overexpansion in expansion sections 2, 9 is not an issue. As already mentioned, in dense atmosphere, a nozzle with a curvature discontinuity operates as a nozzle with a continuous curvature. At high altitude, the expansion sections 2, 9 consecutively contribute to producing thrust.

Depending on the engine application (whether it is mounted on the first rocket stage of on the second rocket stage) one or the other nozzle contour is chosen.

For example, a rocket engine with a Laval nozzle having a curvature discontinuity can be mounted on the first rocket stage. In this case, during the rocket start, engine thrust will be maximum since the nozzle's curvature preceding the discontinuity fully coincides with an Earth nozzle contour. At higher altitudes, such engine will have small thrust losses because of the curvature discontinuity (see Fig. 7).

A rocket engine with a Laval nozzle having a continuous curvature can be mounted on the second rocket stage. In this case, during the rocket start from Earth, thrust losses due to contour discrepancies will be insignificant. In the upper atmosphere the engine will operate at optimum mode because the contour of the slotted Laval nozzle coincides with the optimal smooth contour.

The proposed invention gives the possibility of increasing the payload of a rocket as well as flight range due to engine thrust increment.

## Claims

1. Laval rocket engine expansion nozzle comprising
a throat;
a first expansion section (1) and a second expansion section (2) joined together, defining an inner nozzle surface delimiting an expansion zone for producing thrust in direction of a nozzle axis by expansion of an exhaust gas flow discharged through said throat, a ring slot (3), extending circumferentially around said nozzle axis, being formed between said first and second expansion sections (1, 2), at the junction of said first and second expansion sections (1, 2);
as well as a gas injection device (4, 5, 6) having gas discharge ducts (5) connected to said ring slot (3) for injection of additional gas into said expansion zone;
**characterised in that** a wall (12) extending in said ring slot between said first and second expansion sections (1, 2) comprises through holes (7) disposed about said nozzle axis, said through holes (7) allowing fluid communication between said expansion zone and the outer atmosphere outside of said nozzle to draw atmospheric air into said expansion zone along with injection of additional gas by said gas injection device (4, 5, 6), **in that** the radial width (hₛ) of said ring slot (3) amounts to at most 40 % of the radius (r_{cr}) of said throat, and **in that** said gas discharge ducts (5) have orifices (6) calibrated such that a flow rate of additional gas injected there through into said expansion zone does not exceed 5 % of the flow rate of said exhaust gas flow.

2. Nozzle as claimed in claim 1, wherein the maximum radius (rₐ) of said first expansion section (1) amounts to between 3 and 7 times the radius (r_{cr}) of said throat and wherein the maximum radius (r_{c}) of said second expansion section (2) amounts to between 6 and 15 times the radius (r_{cr}) of said throat.

3. Nozzle as claimed in claim 1 or 2, wherein the radial width (hₛ) of said ring slot (3) amounts to between 20 and 40 % of the radius (r_{cr}) of said throat.

4. Nozzle as claimed in any one of claims 1 to 3, wherein said gas injection device (4, 5, 6) comprises a manifold (4) connected to said gas discharge ducts (5), said manifold (4) being disposed inside said ring slot (3) or in front of said ring slot (3).

5. Nozzle as claimed in any one of claims 1 to 4, comprising a further ring slot (8, 10), the radial widths (hₛ) of said ring slot (3) and said further ring slot (8, 10) amounting together to between 20 and 40 % of the radius (r_{cr}) of said throat.

6. Nozzle as claimed in claim 5, comprising a third expansion section (9) joined to said second expansion section (2), said further ring slot (10) being formed at the junction of said second and third expansion sections (2, 9).

7. Nozzle as claimed in any one of the preceding claims, wherein said second expansion section (2) comprises a cylindrical part (11) surrounding an axial portion of said first expansion section (1), said ring slot (3) at the junction of said first and second expansion sections (1, 2) being delimited by said cylindrical part (11) of said second expansion section (2) and said axial portion of said first expansion section (1).

8. Nozzle as claimed in claim 6, wherein said third expansion section (9) comprises a cylindrical part (11) surrounding an axial portion of said second expansion section (2), said further ring slot (10) at the junction of said second and third expansion sections (2, 9) being delimited by said cylindrical part (11) of said third expansion section (9) and said axial portion of said second expansion section (2).

9. Nozzle as claimed in any one of claims 1 to 8, wherein said inner nozzle surface has a curvature discontinuity at the junction of said first expansion section (1) and said second expansion section (2).

10. Nozzle as claimed in claim 6, wherein said inner nozzle surface has a curvature discontinuity at the junction of said second expansion section (2) and said third expansion section (9).

## Patentansprüche

1. Raketenmotor mit Lavaldüse, aufweisend einen Hals;
einen ersten Expansionsabschnitt (1) und einen zweiten Expansionsabschnitt (2), die zusammengefügt sind und eine innere Düsenfläche definieren, die einen Expansionsbereich zum Erzeugen einer Schubkraft in Richtung einer Düsenachse durch Expansion eines Abgasstroms, der durch den Hals ausgelassen wird, begrenzt, einen Ringschlitz (3), der sich am Umfang um die Düsenachse erstreckt und zwischen dem ersten und dem zweiten Expansionsabschnitt (1, 2) an der Verbindungsstelle des ersten und zweiten Expansionsabschnitts (1, 2) gebildet ist; sowie eine Gaseindüsungsvorrichtung (4, 5, 6) mit Gasentladungskanälen (5), die mit dem Ringschlitz (3) zum Eindüsen von zusätzlichem Gas in den Expansionsbereich verbunden sind;
**dadurch gekennzeichnet, dass** eine Wand (12), die sich in dem Ringschlitz zwischen dem ersten und dem zweiten Expansionsabschnitt (1, 2) erstreckt, Durchgangslöcher (7) aufweist, die um die Düsenachse angeordnet sind, wobei die Durchgangslöcher (7) eine Fluidverbindung zwischen dem Expansionsbereich und der äußeren Atmosphäre außerhalb der Düse ermöglicht, um, zusammen mit der Eindüsung von zusätzlichem Gas durch die Gaseindüsungsvorrichtung (4, 5, 6), atmosphärische Luft in den Expansionsbereich einzuziehen, dass die radiale Breite (hₛ) des Ringschlitzes (3) höchstens 40% des Radius (r_{cr}) des Halses beträgt, und dass die Gasentladungskanäle (5) Öffnungen (6) aufweisen, die derart geeicht sind, dass eine Fließgeschwindigkeit von zusätzlichem Gas, das durch diese in den Expansionsbereich eingedüst wird, 5% der Fließgeschwindigkeit des Abgasstroms nicht übersteigt

2. Düse nach Anspruch 1, wobei der maximale Radius (rₐ) des ersten Expansionsabschnitts (1) zwischen dem 3- und 7-fachen des Radius (r_{cr}) des Halses beträgt, und wobei der maximale Radius (r_{c}) des zweiten Expansionsabschnitts (2) zwischen dem 6- und 15-fachen des Radius (r_{cr}) des Halses beträgt

3. Düse nach Anspruch 1 oder 2, wobei die radiale Breite (hₛ) des Ringschlitzes (3) zwischen 20 und 40% des Radius (r_{cr}) des Halses beträgt

4. Düse nach einem der Ansprüche 1 bis 3, wobei die Gaseindüsungsvorrichtung (4, 5, 6) einen Verteiler (4) aufweist, der mit den Gasentladungskanälen (5) verbunden ist, wobei der Verteiler (4) innerhalb des Ringschlitzes (3) oder vor dem Ringschlitz (3) angeordnet ist

5. Düse nach einem der Ansprüche 1 bis 4, aufweisend einen weiteren Ringschlitz (8, 10), wobei die radialen Breiten (hₛ) des Ringschlitzes (3) und des weiteren Ringschlitzes (8, 10) zusammen zwischen 20 und 40% des Radius (r_{cr}) des Halses betragen

6. Düse nach Anspruch 5, aufweisend einen dritten Expansionsabschnitt (9), der an den zweiten Expansionsabschnitt (2) gefügt ist, wobei der weitere Ringschlitz (10) an der Verbindungsstelle des zweiten und dritten Expansionsabschnitts (2, 9) gebildet ist

7. Düse nach einem der vorhergehenden Ansprüche, wobei der zweite Expansionsabschnitt (2) einen zylindrischen Teil (11) aufweist, der ein axiales Teilstück des ersten Expansionsabschnitts (1) umgibt, wobei der Ringschlitz (3) an der Verbindungsstelle des ersten und zweiten Expansionsabschnitts (1, 2) durch den zylindrischen Teil (11) des zweiten Expansionsabschnitts (2) und das axiale Teilstück des ersten Expansionsabschnitts (1) begrenzt ist

8. Düse nach Anspruch 6, wobei der dritte Expansionsabschnitt (9) einen zylindrischen Teil (11) aufweist, der ein axiales Teilstück des zweiten Expansionsabschnitts (2) umgibt, wobei der weitere Ringschlitz (10) an der Verbindungsstelle des zweiten und dritten Expansionsabschnitts (2, 9) durch den zylindrischen Teil (11) des dritten Expansionsabschnitts (9) und das axiale Teilstück des zweiten Expansionsabschnitts (2) begrenzt ist

9. Düse nach einem der Ansprüche 1 bis 8, wobei die innere Düsenfläche an der Verbindungsstelle des ersten Expansionsabschnitts (1) und des zweiten Expansionsabschnitts (2) eine Krümmungsunstetigkeit aufweist

10. Düse nach Anspruch 6, wobei die innere Düsenfläche an der Verbindungsstelle des zweiten Expansionsabschnitts (2) und des dritten Expansionsabschnitts (9) eine Krümmungsunstetigkeit aufweist

## Revendications

1. Tuyère de Laval de moteur de fusée comprenant une gorge ;
une première section de dilatation (1) et une deuxième section de dilatation (2) jointes ensemble, définissant une surface intérieure de tuyère délimitant une zone de dilatation pour produire une poussée dans le sens d'un axe de tuyère par dilatation d'un flux de gaz d'échappement déchargé à travers ladite gorge, une fente en anneau (3), s'étendant circonférentiellement autour dudit axe de tuyère, étant formée entre lesdites première et deuxième sections de dilatation (1, 2) à la jonction desdites première et deuxième sections de dilatation (1, 2) ;
ainsi qu'un dispositif d'injection de gaz (4, 5, 6) ayant des conduites de décharge de gaz (5) connectées à ladite fente en anneau (3) pour une injection de gaz additionnel dans ladite zone de dilatation ;
**caractérisée en ce qu'**une paroi (12) s'étendant dans ladite fente en anneau entre lesdites première et deuxième sections de dilatation (1, 2) comprend des trous traversants (7) disposés autour dudit axe de tuyère, lesdits trous traversants (7) permettant une communication de fluide entre ladite zone de dilatation et l'atmosphère extérieure à l'extérieur de ladite tuyère pour aspirer de l'air atmosphérique dans ladite zone de dilatation en même temps que l'injection de gaz additionnel par ledit dispositif d'injection de gaz (4, 5, 6), **en ce que** la largeur radiale (hₛ) de ladite fente en anneau (3) s'élève à au plus 40% du rayon (r_{cr}) de ladite gorge, et **en ce que** lesdites conduites de décharge de gaz (5) ont des orifices (6) calibrés de telle façon qu'un débit de gaz additionnel injecté à travers ceux-ci dans ladite zone de dilatation n'excède pas 5% du débit dudit flux de gaz d'échappement.

2. Tuyère selon la revendication 1, dans laquelle le rayon maximum (rₐ) de ladite première section de dilatation (1) s'élève à entre 3 et 7 fois le rayon (r_{cr}) de ladite gorge et dans laquelle le rayon maximum (r_{c}) de ladite deuxième section de dilatation (2) s'élève à entre 6 et 15 fois le rayon (r_{cr}) de ladite gorge.

3. Tuyère selon la revendication 1 ou 2, dans laquelle la largeur radiale (hₛ) de ladite fente en anneau (3) s'élève à entre 20 et 40% du rayon (r_{cr}) de ladite gorge

4. Tuyère selon l'une quelconque des revendications 1 à 3, dans laquelle ledit dispositif d'injection de gaz (4, 5, 6) comprend un collecteur (4) connecté auxdites conduites de décharge de gaz (5), ledit collecteur (4) étant disposé à l'intérieur de ladite fente en anneau (3) ou en avant de ladite fente en anneau (3)

5. Tuyère selon l'une quelconque des revendications 1 à 4, comprenant une autre fente en anneau (8, 10), la largeur radiale (hₛ) de ladite fente en anneau (3) et de ladite autre fente en anneau (8, 10) s'élevant ensemble à entre 20 et 40% du rayon (r_{cr}) de ladite gorge

6. Tuyère selon la revendication 5, comprenant une troisième section de dilatation (9) jointe à ladite deuxième section de dilatation (2), ladite autre fente en anneau (10) étant formée à la jonction desdites deuxième et troisième sections de dilatation (2, 9).

7. Tuyère selon l'une quelconque des revendications précédentes, dans laquelle ladite deuxième section de dilatation (2) comprend une partie cylindrique (11) entourant une partie axiale de ladite première section de dilatation (1), ladite fente en anneau (3) à la jonction desdites première et deuxième sections de dilatation (1, 2) étant délimitée par ladite partie cylindrique (11) de ladite deuxième section de dilatation (2) et ladite partie axiale de ladite première section de dilatation (1)

8. Tuyère selon la revendication 6, dans laquelle ladite troisième section de dilatation (9) comprend une partie cylindrique (11) entourant une partie axiale de ladite deuxième section de dilatation (2), ladite autre fente en anneau (10) à la jonction desdites deuxième et troisième sections de dilatation (2, 9) étant délimitée par ladite partie cylindrique (11) de ladite troisième section de dilatation (9) et ladite partie axiale de ladite deuxième section de dilatation (2).

9. Tuyère selon l'une quelconque des revendications 1 à 8, dans laquelle ladite surface intérieure de tuyère a une discontinuité de courbure à la jonction de ladite première section de dilatation (1) et de ladite deuxième section de dilatation (2)

10. Tuyère selon la revendication 6, dans laquelle ladite surface intérieure de tuyère a une discontinuité de courbure à la jonction de ladite deuxième section de dilatation (2) et de ladite troisième section de dilatation (9)
